# EUROPEAN PATENT SPECIFICATION

(11) **EP 4 625 643 B1**
(45) Date of publication and mention of the grant of the patent: **02.12.2026**
(21) Application number: 24205177.9
(22) Date of filing: 08.10.2024
(51) Int. Cl.: H01M 50/204, H01M 50/244, H01M 50/249, H01M 50/258, H01M 50/183, H01M 50/289, B60L 50/64, H01M 50/224, H01M 50/236, H01M 50/256, H01M 50/264, H01M 50/242

(54) **BATTERY CASE**
BATTERIEGEHÄUSE
BOÎTIER DE BATTERIE

(30) Priority: 27.03.2024 CN 202420616915 U; 30.04.2024 WO PCT/CN2024/091014
(43) Date of publication of application: 01.10.2025
(73) Proprietor: Eve Energy Co., Ltd., Huizhou, Guangdong 516006 (CN)
(72) Inventor: HUANG, Liliang, Huizhou, Guangdong 516006 (CN)
(74) Representative: Herrero & Asociados, S.L.

(56) References cited:
- WO-A1-2023/174309
- CN-U- 216 915 504
- CN-U- 219 436 011
- CN-U- 220 324 583

## Description

### TECHNICAL FIELD

The present disclosure relates to the field of batteries, and in particular to a battery case.

### BACKGROUND

The battery case usually includes a case body and a mounting beam. The mounting beam is fixedly connected to a frame of the case body. The mounting beam protrudes from out of the frame. The mounting beam is fixed with a bushing. When in use, a bolt is screwed from a bottom of the mounting beam, extending through the mounting beam and the bushing successively, to be fastened to a body of a vehicle. In this way, the battery case is loaded on the body of the vehicle. For the battery case in the art, the mounting beam and the frame are fixed in the following manner. A portion of the mounting beam takes a surface to abut against the frame. The mounting beam is fixed, by arc welding, to the frame. However, such connection between the mounting beam and the frame has following shortcomings. A protective film cannot be electrophoretically formed on the surface of the mounting beam that abuts against the frame. An area surrounding the welded portion of the mounting beam and the frame may be corroded and rusting easily, leading to a short service life of the battery case.

CN216915504U, CN220324583U, WO2023174309A1 and CN219436011U relate to battery casing structures.

### SUMMARY OF THE DISCLOSURE

The present disclosure provides a battery case, including a case body and a loading assembly arranged at an exterior of the case body. The case body includes a frame, the loading assembly includes a first loading plate, the first loading plate is arranged with a first connection portion, the first connection portion is disposed at a lower side of the frame; the first connection portion is fixed, by resistance-welding, to a bottom surface of the frame; the frame defines a cavity therein; a top surface of the frame defines a first welding hole communicated with the cavity; the first welding hole leaves a space for a resistance welding needle; a sealing adhesive layer is arranged around a welding position where the first connection portion is welded to the frame.

According to the present disclosure, a sealing adhesive layer is arranged around the welding portion of the first connection portion and the frame. The sealing adhesive layer seals a gap at the welding portion of the first connection portion and the frame. In this way, the welding portion of the first connection portion and the frame is prevented from being oxidized and corroded due to contact with the air through the gap, such that a possibility of the connection between the first loading plate and the frame being failed is reduced, and the service life of the battery case may be extended. In addition to the first connection portion being resistance-welded to the frame, the sealing adhesive layer is also bonded with the first connection portion and the frame. The connection between the first loading plate and the frame is strengthened by the sealing adhesive layer. In this way, the connection between the first loading plate and the frame is more solid, and a risk of the first loading plate falling off from the frame is reduced. In addition, heat of the resistance welding is more concentrated, an influence applied by a hot zone of the resistance welding on the plate is less than an influence applied by a hot zone of arc welding on the plate. When the first connection portion is resistance-welded to the bottom surface of the frame, a damage, caused by the welding, to the first loading plate and the frame is reduced, such that manufacturing quality of the battery case is improved. A top surface of the frame defines a first welding hole communicated with the cavity. In this way, when the resistance welding is performed, a welding needle extends from the top of the frame, passing through the first welding hole and the cavity successively, to contact the bottom of the frame. In this way, the bottom of the frame is facilitated to be welded to the first loading plate. Furthermore, since the first connection portion is connected to the bottom of the frame, when the case body is loaded on the carrier through the loading assembly, the force, which is applied by the first connection portion on the bottom of the frame, is upwardly. In this way, the first loading plate is prevented from falling off from the frame.

### BRIEF DESCRIPTION OF THE DRAWINGS

FIG. 1 is a perspective view of a battery case according to some embodiments of the present disclosure.
FIG. 2 is an enlarged view of a portion A in FIG. 1.
FIG. 3 is an enlarged view of a portion B in FIG. 2.
FIG. 4 is a structural schematic view of a connection structure of a first loading and a frame according to some embodiments of the present disclosure.
FIG. 5 is a perspective view of the battery case according to some other embodiments of the present disclosure.
FIG. 6 is an enlarged view of a portion C in FIG. 5.
FIG. 7 is a perspective view of the battery case, having a bottom protective plate omitted, according to some other embodiments of the present disclosure.
FIG. 8 is an enlarged view of a portion D in FIG. 7.
FIG. 9 is a structural schematic view of a liquid cooling plate according to some embodiments of the present disclosure.
FIG. 10 is an enlarged view of a portion E in FIG. 9.
FIG. 11 is a cross-sectional view of the bottom protective plate according to some embodiments of the present disclosure.
FIG. 12 is an exploded view of the battery case according to some other embodiments of the present disclosure.
FIG. 13 is an enlarged view of a portion of the structure shown in FIG. 12.
FIG. 14 is a structural schematic view of a portion of the battery case according to some embodiments of the present disclosure.

Reference numerals:
1, case body; 11, frame; 110, bottom surface; 111, body portion; 1110, connection position; 1111, protrusion portion; 112, protruding tab; 1121, first welding hole; 1122, second welding hole; 113, reinforcing rib; 114, cavity; 1141, first sub-cavity; 1142, second sub-cavity; 12, bottom protective plate; 121, steel plate; 122, fiberglass layer; 2, loading assembly; 21, first loading plate; 210, welding position; 211, first connection portion; 2111, first avoidance notch; 2112, second avoidance notch; 212, first substrate; 2121, first protrusion; 213, first transition section; 22, second loading plate; 220, welding position; 221, second connection portion; 222, second substrate; 2221, second protrusion; 223, second transition section; 23, third loading plate; 231, third connection portion; 2311, fourth protrusion; 232, third substrate; 2321, third protrusion; 233, third transition section; 24, chamber; 25, weight reduction hole; 3, first connection member; 4, sealing member; 5, second connection member; 6, bushing; 7, liquid cooling plate; 71, channel portion ; 72, abutting portion; 721, fifth protrusion; 73, protruding rib; 8, sealing adhesive layer; 9, fastener.

### DETAILED DESCRIPTION

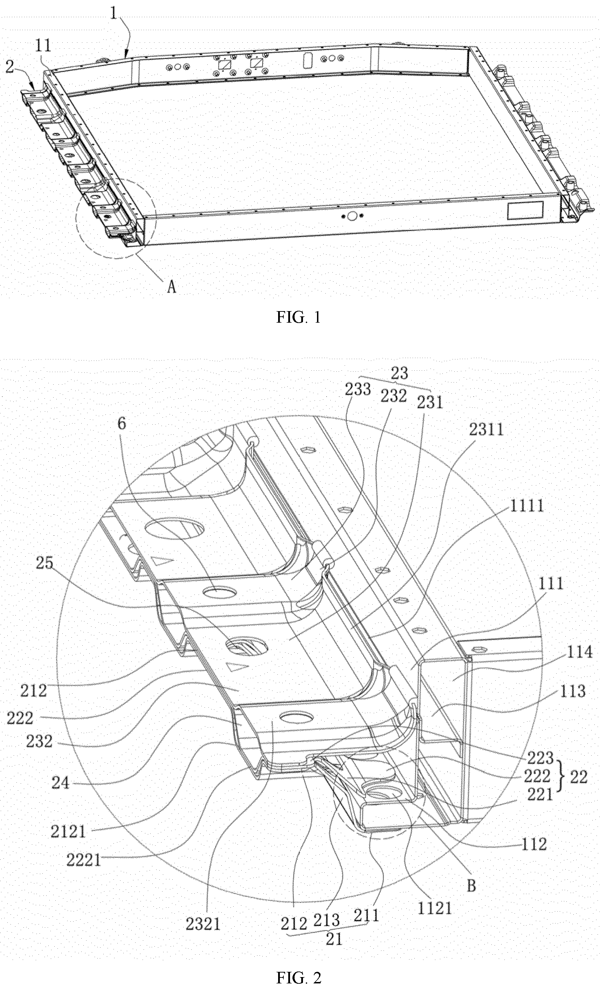

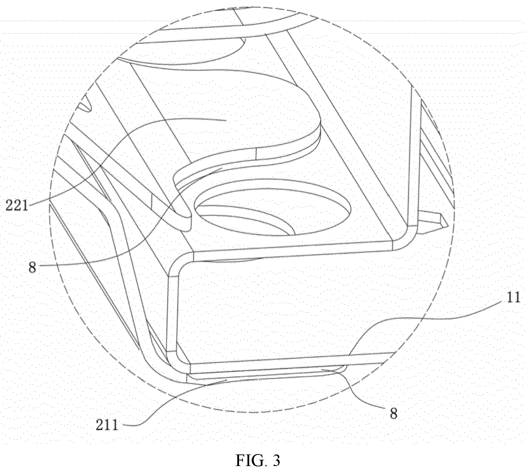

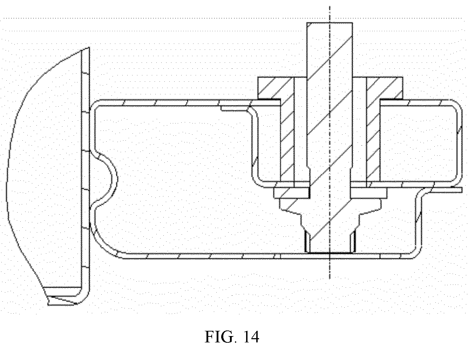

As shown in FIGS. 1 to 5, the present disclosure provides a battery case including a case body 1 and a loading assembly 2 arranged at an exterior of the case body 1. The case body 1 includes a frame 11. The loading assembly 2 includes a first loading plate 21. An end of the first loading plate 21 is arranged with a first connection portion 211, and the first connection portion 211 is disposed at a lower side of the frame 11. The first connection portion 211 is resistance-welded to a bottom surface 110 of the frame 11. The frame 11 defines a cavity 114 therein. A top surface of the frame 11 defines a first welding hole 1121 communicated with the cavity 114. The first welding hole 1121 leaves a space for a resistance welding needle. A sealing adhesive layer 8 is arranged around a welding position 210 where the first connection portion 211 is welded to the frame 11. In practice, as shown in FIG. 14, the loading assembly 2 is fastened by a fastener 9 to a loading member (such as a vehicle) to load the case body 1 of the battery onto the loading member.

The sealing adhesive layer 8 is arranged around the welding position 210 of the first connection portion 211 and the frame 11. The sealing adhesive layer 8 seals a gap of the welding position 210 of the first connection portion 211 and the frame 11, preventing the welding position 210 between the first connection portion 211 and the frame 11 from being oxidized and corroded due to contact with the air through any gap. In this way, a possibility of the connection between the first loading plate 21 and the frame 11 being failed is reduced, and the service life of the battery case is extended. In addition to the first connection portion 211 being resistance-welded to the frame 11, the sealing adhesive layer 8 is also bonded with the first connection portion 211 and the frame 11. The sealing adhesive layer 8 is arranged to improve connection strength between the first loading plate 21 and the frame 11. In this way, the connection between the first loading plate 21 and the frame 11 is more solid, and a risk of the first loading plate 21 falling off from the frame 11 is reduced. In addition, heat of the resistance welding is more concentrated. An influence applied by a hot zone of the resistance welding on the plate is less than an influence applied by a hot zone of arc welding on the plate. When the first connection portion 211 is resistance-welded to the bottom surface 110 of the frame 11, a damage, caused by the welding, to the first loading plate 21 and the frame 11 is reduced, such that manufacturing quality of the battery case is improved. The top surface of the frame 11 defines the first welding hole 1121 communicated with the cavity 114. In this way, when the resistance welding is performed, the welding needle extends from the top of the frame 11, passing through the first welding hole 1121 and a chamber 24 successively, to contact the bottom of the frame 11. In this way, the bottom of the frame 11 is facilitated to be welded to the first loading plate 21. Furthermore, since the first connection portion 211 is connected to the bottom of the frame 11, when the case body 1 is loaded on the loading member through the loading assembly 2, a force, which is applied by the first connection portion 211 on the bottom of the frame 11, is upwardly. In this way, the first loading plate 21 is prevented from falling off from the frame 11.

In practice, a paste-like sealant is firstly coated on a to-be-attached surface of at least one of the first connection portion 211 and the frame 11. In this way, the to-be-attached surface of the at least one of the first connection portion 211 and the frame 11 is fully with the paste-like sealant. Subsequently, the first connection portion 211 is attached to the frame 11. In addition, a position of the first connection portion 211 is fixed. An end of the resistance welding needle extends from the top of the frame 11, passing through the first welding hole 1121 and the cavity 114 successively, to abut against the frame 11. Furthermore, the resistance welding needle compresses the frame 11 to enable a portion where the first connection portion 211 and the frame 11 are attached to each other to be welded and fixed. The paste-like sealant between the first connection portion 211 and the frame 11 may overflow, by being compressed, out of the welding portion 210 between the first connection portion 211 and the frame 11. The sealant is cured and forms the sealing adhesive layer 8 around the welding portion 210 between the first connection portion 211 and the frame 11.

As shown in FIGS. 1 to 4, the frame 11 includes a body portion 111 and a protruding tab 112 connected to the body portion 111, and an angle is generated between a bottom of the body portion 111 and the protruding tab 112. The body portion 111 defines a first sub-cavity 1141 therein. The protruding tab 112 defines a second sub-cavity 1142 therein. The first sub-cavity 1141 and the second sub-cavity 1142 are communicated with each other to cooperatively form the cavity 114. The protruding tab 112 protrudes out of a side of the body portion 111 away from an interior of the case body 1. The first loading plate 21 is fixedly welded to the protruding tab 112. A top surface of the protruding tab 112 defines the first welding hole 1121. In the present example, the protruding tab 112 is connected to the body portion 111, and the angle between the protruding tab 112 and the body portion 111 is 90 degrees. In other examples, the angle between the protruding tab 112 and the body portion 111 may be determined as needed, such as 30°, 60°, 120°, 150°, and so on. Due to the angle between the protruding tab 112 and the portion body 111, structural strength of the frame 11 may be improved. The frame 11 and the first loading plate 21 provide a space, such that connection between the first connection portion 211 and the frame 11 may be achieved by the resistance welding needle. Specifically, the sealing adhesive layer 8 covers around the welding portion 210 between the first connection portion 211 and the protruding tab 112.

It is understood that the battery case is loaded on the loading member by the loading assembly 2, and therefore, the loading assembly 2 is the main component of the battery case that receives forces. In order to improve a force-receiving capacity of the loading assembly 2, as shown in FIGS. 1 and 2, in an embodiment, the loading assembly 2 further includes a second loading plate 22, and the second loading plate 22 is connected to an upper side of the first loading plate 21. In the present embodiment, the second loading plate 22 and the first loading plate 21 are resistance welded to each other for fixing. An end of the second loading plate 22 is arranged with a second connection portion 221. The second connection portion 221 is resistance welded to be fixed to a top of the protruding tab 112. A bottom 110 of the protruding tab 112 defines a second welding hole 1122 communicated with the second sub-cavity 1142 of the protruding tab 112. The second welding hole 1122 leaves a space for the resistance welding needle. The second welding hole 1122 is misaligned with the first welding hole 1121. The sealing adhesive layer 8 is disposed around a welding position 220 between the second connection portion 221 and the protruding tab 112. By arranging the second loading plate 22 connected to the upper side of the first loading plate 21, overall structural strength of the loading assembly 2 may be improved, the loading assembly 2 may be prevented from being deformed, such that a load-bearing capacity of the battery case may be improved. The second connection portion 221 of the second loading plate 22 is resistance welded to be fixed with a top surface of the protruding tab 112. In this way, a connection area between the loading assembly 2 and the frame 11 is increased, the connection structure between the loading assembly 2 and the frame 11 may be improved. The second loading plate 22 is welded to the top surface of the protruding tab 112, and the first loading plate 21 is welded to the bottom surface 110 of the protruding tab 112. In this way, a damage to the frame 11 caused by the hot zone may be reduced. Furthermore, the sealing adhesive layer 8 is disposed at the welding position 220 between the second connection portion 221 and the protruding tab 112. By arranging the sealing adhesive layer 8, the gap at the welding position between the second loading plate 22 and the frame 11 is sealed, oxidation and corrosion at the welding position due to contact with air may be reduced, a possibility of the connection between the second loading plate 22 and the frame 11 being failed may be reduced. Since the sealing adhesive layer 8 is bonded to the second connection portion 221 and the protruding tab 112, the strength of the connection between the second loading plate 22 and the frame 11 may be improved, and strength of the connection between the loading assembly 2 and the case body 1 may be improved. In practice, a method of forming the sealing adhesive layer 8 around the welding position 220 between the second connection portion 221 and the protruding tab 112 is similar to a method of forming the sealing adhesive layer 8 around the welding position 210 between the first connection portion 211 and the frame 11. The method of forming the sealing adhesive layer 8 around the welding position 220 between the second connection portion 221 and the protruding tab 112 will not be repeatedly described herein.

In an embodiment, in a case where the loading assembly 2 has the second loading plate 22, the first connection portion 211 is provided defines a first avoidance notch 2111, and the first avoidance notch 2111 is spaced apart from the second welding hole 1122. When the second loading plate 22 is welded to the frame 11, the first loading plate 21 is prevented from interfering with the position of the resistance welding needle. The second connection portion 221 defines a second avoidance notch 2112 that is spaced apart from the first welding hole 1121. In a case where the second loading plate 22 is welded to the protruding tab 112, when the first loading plate 21 is welded to the frame 11, the resistance welding needle is spaced apart from the second avoidance notch 2112, preventing the second loading plate 22 from interfering with the position of the resistance welding needle.

In another embodiment, the first connection portion 211 defines the first avoidance notch 2111. In this case, the first loading plate 21 is firstly welded to the protruding tab 112, and then the second loading plate 22 is welded to the protruding tab 112.

In still another embodiment, the second connection portion 221 defines the second avoidance notch 2112. In this case, the second loading plate 22 is firstly welded to the protruding tab 112, and then the first loading plate 21 is welded to the protruding tab 112.

In still another embodiment, a diameter of the first welding hole 1121 is in a range of 18mm-22mm. For example, the diameter of the first welding hole 1121 may be 18mm, 19mm, 20mm, 21mm, or 22mm. A diameter of the second welding hole 1122 is in a range of 18mm-22mm. For example, the diameter of the second welding hole 1122 may be 18mm, 19mm, 20mm, 21mm, or 22mm.

It is understood that a diameter of the resistance welding needle is in a range of 16mm-20mm. By arranging the welding hole to have the diameter of 16mm-20mm, it is ensured that the resistance welding needle is not interfered by the welding hole, and the structural strength of the frame 11 is prevented from being weakened due to large sized welding holes being defined in the frame 11. Of course, in practice, diameters of the first welding hole 1121 and the second welding hole 1122 may be determined flexibly and will not be limited herein.

In the present embodiment, as shown in FIGS. 1 and 2, the loading assembly 2 further includes a third loading plate 23. The third loading plate 23 is connected to a side of the second loading plate 22 away from the first loading plate 21. An end of the third loading plate 23 is arranged with a third connection portion 231. An end of the third connection portion 231 is welded to the body portion 111. By arranging the third loading plate 23, the overall structural strength of the mount loading 2 is further enhanced. Moreover, the third connection portion 231 of the third loading plate 23 is welded to the body portion 111, the welding portion of the loading plate and the frame 11 is expanded, it is prevented from welding all of the loading plates to the protruding tab 112 of the frame 11, such that stresses applied by the loading plates on the frame 11 may be dispersed.

In practice, the third connection portion 231 is connected to the body portion 111 by arc welding. Contact between the third connection portion 231 and the body portion 111 is line contact. A contact portion between the third loading plate 23 and the frame 11 is small. A protective film may be formed around the contact portion between the third loading plate 23 and the frame 11 by electrophoresis. In addition, an anticorrosive coating may be sprayed, at a later stage, to the contact portion between the third loading plate 23 and the frame 11.

Specifically, as shown in FIGS. 1 and 2, the first loading plate 21 further includes a first substrate 212. An end of the first substrate 212 is arranged with a first connection portion 211. The second loading plate 22 further includes a second substrate 222. An end of the second substrate 222 is arranged with a second connection portion 221. The second loading plate 22 further includes a third substrate 232. An end of the third substrate 232 is arranged with a third connection portion 231. The first substrate 212, the second substrate 222, and the third substrate 232 are welded and fixed to each other. In this way, the first loading plate 21, the second loading plate 22, and the third loading plate 23 are bonded to each other, such that the overall structural strength of the loading assembly 2 may be improved. In the present embodiment, the first substrate 212, the second substrate 222, and the third substrate 232 are fixed to each other by resistance welding. In other embodiments, the three substrates may alternatively be fixed to each other by arc welding.

In an embodiment, as shown in FIG. 14, the loading assembly 2 is fastened, by a fastener 9, to the loading member on an outside of the battery case. In the present embodiment, the fastener 9 is a fastening bolt. The loading assembly 2 further includes a bushing 6, and the fastener 9 extends through the bushing 6. The bushing 6 extends from the first substrate 212, through the second substrate 222, to reach the third substrate 232. The bushing 6 is fixed to the first substrate 212, the second substrate 222, and the third substrate 232. The fastener 9 is threaded, through the bushing 6, to the loading member. Since the fastener 9 enables the loading assembly 2 to be threaded to the loading member, the case body 1 can be detachably connected to the loading member. The bushing 6 allows the stress of the loading assembly 2 to be transferred to the loading member, enabling the battery case and the loading member to be connected to each other stably. Since the bushing 6 is fixed to the substrates of the three loading plates, the three loading plates apply forces to stress-bearing components of the loading assembly 2, preventing the loading assembly 2 from being deformed.

Specifically, the first substrate 212 is arranged with a plurality of first protrusions 2121 protruding downward, and the second substrate 222 is arranged with a plurality of second protrusions 2221 protruding downward. The plurality of second protrusions 2221 and the plurality of first protrusions 2121 are in one-to-one correspondence with each other. Each second protrusion 2221 is connected into a corresponding one of the plurality of first protrusions 2121. The third substrate 232 is arranged with a plurality of third protrusions protruding upward. The plurality of third protrusions 2321 and the plurality of second protrusions 2221 are in one-to-one correspondence with each other. The third protrusions 2321 are spaced apart from the second protrusions 2221 are disposed above the second protrusions 2221. A chamber 24 is formed between each third protrusion 2321 and a corresponding one of the plurality of second protrusions 2221. The bushing 6 extends sequentially from the first protrusions 2121, the second protrusions 2221, the chamber 24, to reach the third protrusions 2321. The substrate is arranged with a plurality of protrusions, such that the substrate has concaves and convexes, enabling the overall structural strength of the loading plate to be improved. Since the bushing 6 has a certain height, the chamber 24 is formed between the third protrusion 2321 and the corresponding second protrusion 2221, a portion of the bushing 6 can be received in the chamber 24, preventing the bushing 6 from protruding out of the top or the bottom of the loading assembly 2.

In a case that the loading member is the vehicle body and the fastener 9 is the fastening bolt, a portion of the vehicle body for mounting the battery case is disposed above the loading assembly 2, and the fastening bolt is threaded from the bottom of the first loading plate 21, passing through the bushing 6, to be connected to the loading member. When the fastening bolt fastens the loading assembly 2 to the vehicle body, a nut of the fastening bolt protrudes out of the bottom of the loading assembly 2, and the nut may interfere with a portion of the vehicle body disposed at the bottom of the loading assembly 2. In the present embodiment, the first substrate 212 is disposed above the first connection portion 211. The first loading plate 21 further includes a first transition section 213. The first substrate 212 is connected to the first connection portion 211 via the first transition section 213. By disposing the first substrate 212 above the first connection portion 211, a lower side of the first substrate 212 has a space for receiving the fastening bolt, preventing the nut of the fastening bolt from interfering with the vehicle body. Furthermore, by disposing the first substrate 212 above the first connection portion 211, the first substrate 212 is disposed nearer to the loading member above the first substrate 212, and a length of the fastening bolt may be shortened. Since the first substrate 212 is connected to the first connection portion 211 via the first transition section 213, the first connection portion 211 may smoothly transit to the first substrate 212, allowing the overall structure of the first loading plate 21 to be maintained.

In an embodiment, the second substrate 222 is disposed above the second connection portion 221, the second loading plate 22 further includes a second transition section 223, the second substrate 222 is connected to the second connection portion 221 via the second transition section 223. From a bottom to a top, the second transition section 223 is inclined from the second connection portion 221 toward the second substrate 222, such that the second substrate 222 and the second connection portion 221 are disposed in an up-down direction. By arranging the second transition section 223, the stress of the second substrate 222 may be cushioned, reducing a possibility of the second connection portion 221 falling off from the frame 11.

In an embodiment, the third substrate 232 is disposed below the third connection portion 231, the third loading plate further includes a third transition section 233. The third substrate 232 is connected to the third connection portion 231 via the third transition section 233. Specifically, the third transition section 233 is curved, enabling the third connection section 231 to transit smoothly through the third transition section 233, preventing a portion of the third substrate 232 connected to the third connection portion 231 from being broken.

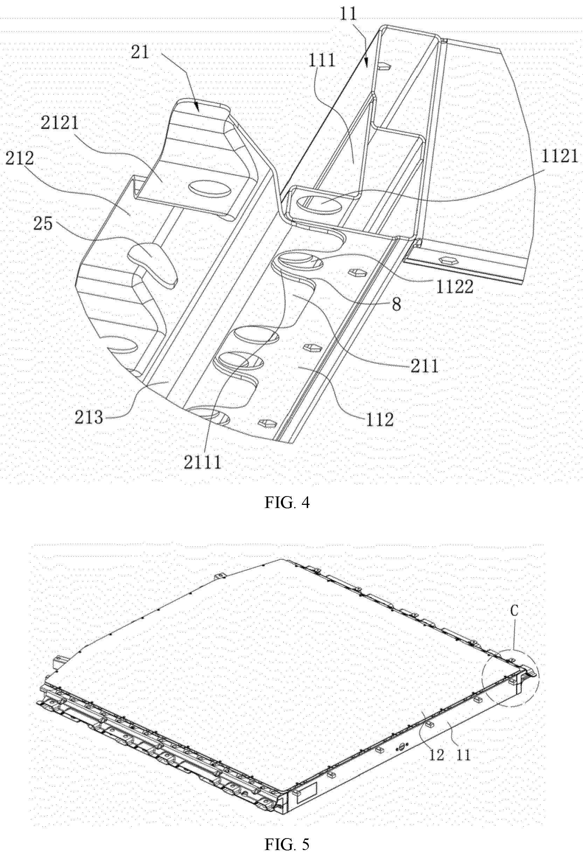

In the present embodiment, as shown in FIGS. 2 and 4, each of the first substrate 212, the second substrate 222, and the third substrate 232 defines a weight-reduction hole 25. The weight-reduction hole 25 of the first substrate 212, the weight-reduction hole of the second substrate 222, and the weight-reduction hole of the third substrate 232 are directly facing to each other.

In an embodiment, as shown in FIG. 2, a plurality of protruding portions 1111 are protruding from a side of the body portion 111 toward the loading assembly 2. The plurality of protruding portions 1111 are spaced apart from each other and are distributed along a length direction of the frame 11. A connection position 1110 is formed between two adjacent protruding portions 1111 of the plurality of protruding portions 1111. The third connection portion 231 is welded to the connection position 1110. A fourth protrusion 2311 is arranged at a position of the third connection portion 231 corresponding to a position between two connection positions 1110. The protruding portion 1111 abuts against an inside of the fourth position 2311. A plurality of protruding portions 1111 are arranged on the body portion 111 to strengthen the structure of the frame 11. By forming the connection position 1110 to enable the two adjacent protruding portions 1111 to be spaced apart from each other, a zone is left on the body portion 111 for welding the third connection portion 231, and material for manufacturing the frame 11 is saved optimally.

In the present embodiment, the first loading plate 21, the second loading plate 22, the third loading plate 23, and the frame 11 are all made of steel (such as 780DP)). A thickness of the steel is in a range of 1.0 mm-1.5 mm. The frame 11 is made by performing a roller pressing process. The first loading plate 21, the second loading plate 22, and the third loading plate 23 are made by performing a stamping process.

In order to improve the overall structural strength of the frame 11, as shown in FIG. 2, reinforcing ribs 113 are arranged in the cavity 114 in the frame 11. In the present embodiment, the reinforcing ribs 113 are arranged in the first sub-cavity 1141 in the body portion 111. In other examples, the reinforcing ribs 113 may be arranged in the second sub-cavity 1142 in the protruding tab 112 or arranged in both the first sub-cavity 1141 in the body portion 111 and the second sub-cavity 1142 in the protruding tab 112. In practice, the number of reinforcing ribs 113 in the cavity 114 in the frame 11 may determined based on demands.

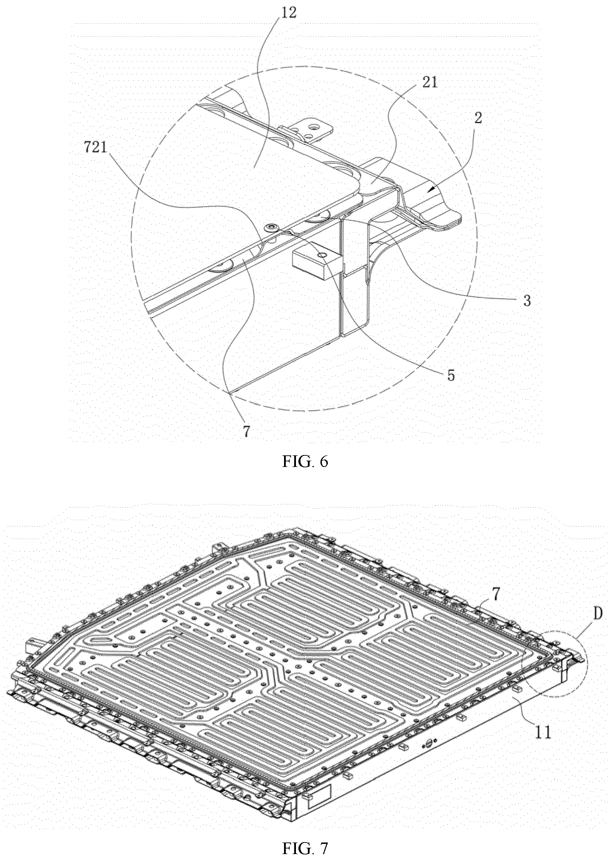

In another embodiment, as shown in FIGS. 5 and 6, the case body 1 further includes a bottom protective plate 12 disposed at the bottom of the frame 11. The bottom protective plate 12 includes a steel plate 121 and a fiberglass layer 122 wrapped around a periphery of the steel plate 121. The bottom protective plate 12 is in a composite structure, formed by combining the steel plate 121 and the fiberglass layer 122. Compared to the bottom protective plate 12 in the art that is formed purely by the steel plate 121, the bottom protective plate 12 in the present disclosure is lighter in weight. The steel for manufacturing the bottom protective plate 12 is less, the material is saved, and costs of the bottom protective plate 12 are reduced.

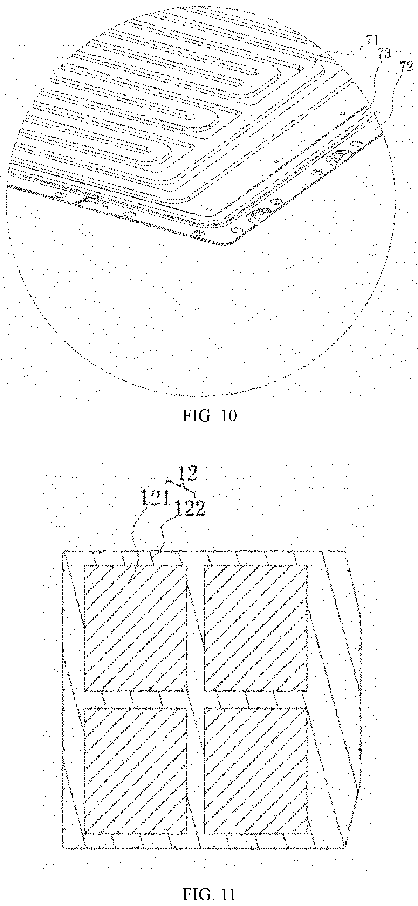

In an embodiment, as shown in FIG. 11, at least two steel plates 121 are arranged. The at least two steel plates 121 are spaced apart from each other and are disposed on a same plane. A glass limiting layer is filled between two adjacent steel plates 121. In this way, an ability of the bottom protective plate 12 to resist against stresses is improved. In the present embodiment, the bottom protective plate 12 is arranged with four steel plates 121, the four steel plates 121 are evenly distributed into two columns. The two columns of steel plates 121 are spaced apart from each other. Two steel plates 121 of a same column are spaced apart from each other and are distributed in a same horizontal direction,

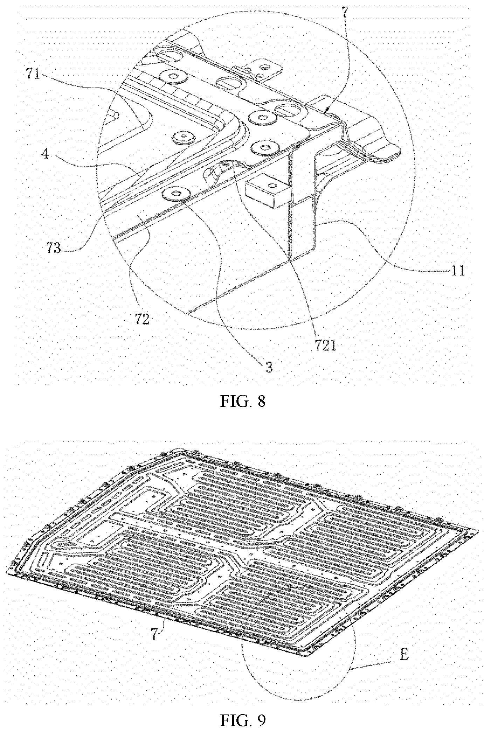

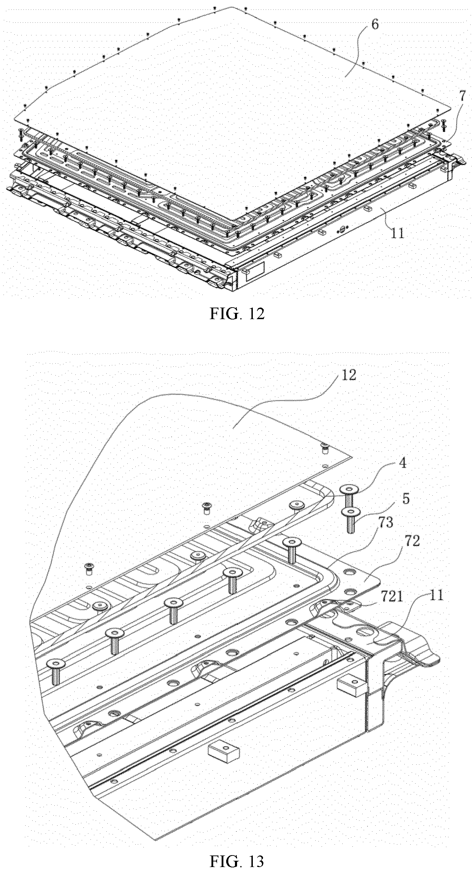

In an embodiment, as shown in FIGS. 7 to 10 and FIGS. 12 and 13, the battery case further includes a liquid cooling plate 7. The frame 11, the liquid cooling plate 7, and the bottom protective plate 12 are disposed in sequence from top to bottom. The liquid cooling plate 7 is connected to the frame 11 via a first connection member 3. The bottom protective plate 12 is detachably connected to the liquid cooling plate 7 via a second connection member 5. The liquid cooling plate 7 is substantially configured to cool down a battery arranged inside the case body 1. In this way, performance of heat dissipation and cooling of the battery case is improved. By arranging the bottom protective plate 12 to be detachably connected to the liquid cooling plate 7 via the second connection member 5, the bottom protective plate 12 may be assembled and disassembled easily, and the bottom protective plate 12 may be replaced easily if being damaged.

In an embodiment, the first connection member 3 is a rivet nut.

In an embodiment, the second connection member 5 is a rivet or a bolt.

Specifically, the liquid cooling plate 7 includes a channel portion 71 and an abutting portion 72 disposed at an outer periphery of the channel portion 71. The abutting portion 72 is connected to the frame 11 and the bottom protective plate 12. A cooling liquid may flow inside the channel portion 71. A protruding rib 73 is arranged between the channel portion 71 and the abutting portion 72. The protruding rib 73 protrudes out of the channel portion 71. A fifth protrusion 721 is arranged protruding from the abutting portion 72. The second connection member 5 is screwed, by passing through the bottom protective plate 12, into the fifth protrusion 721. A sealing ring 4 is disposed between the protruding rib 73 and the bottom protective plate 12. The bottom protective plate 12 tightly abuts, by the sealing ring 4, against the protruding rib 73 on the liquid cooling plate 7, preventing the bottom protective plate 12 from compressing the channel portion 71 to affect flowing of the cooling liquid inside the channel portion 71. The fifth protrusion 721 provides a position for the connection between the second connection member 5 and the liquid cooling plate 7, such that the liquid cooling plate 7 and the bottom protective plate 12 to be tightly bonded to each other, improving the connection strength between the liquid cooling plate 7 and the bottom protective plate 12. In the present embodiment, a width of the protruding rib 73 is 8 mm. Of course, in other embodiments, the width of the protruding rib 73 may be determined according to demands, such as 7 mm, 9 mm, 10 mm, and so on, which will not be limited herein.

## Claims

1. A battery case, comprising a case body (1) and a loading assembly (2) arranged at an exterior of the case body (1); wherein,
the case body (1) comprises a frame (11), the loading assembly (2) comprises a first loading plate (21), the first loading plate (21) is arranged with a first connection portion (211), the first connection portion (211) is disposed at a lower side of the frame (11); the first connection portion (211) is fixed, by resistance-welding, to a bottom surface of the frame (11); the frame (11) defines a cavity (114) therein; a top surface of the frame (11) defines a first welding hole (1121) communicated with the cavity (114); the first welding hole (1121) leaves a space for a resistance welding needle; a sealing adhesive layer (8) is arranged around a welding position where the first connection portion (211) is welded to the frame (11).

2. The battery case according to claim 1, wherein, the frame (11) comprises a body portion (111) and a protruding tab (112) connected to a bottom of the body portion (111), an angle is generated between the bottom of the body portion (111) and the protruding tab (112), each of the body portion (111) and the protruding tab (112) defines the cavity (114) therein, the cavity (114) of the body portion (111) is communicated with the cavity (114) of the protruding tab (112), the protruding tab (112) protrudes out of a side of the body portion (111) away from an interior of the case body (1), the first loading plate (21) is fixedly welded to the protruding tab (112), a top surface of the protruding tab (112) defines the first welding hole (1121).

3. The battery case according to claim 2, wherein, the loading assembly (2) further comprises a second loading plate (22), the second loading plate (22) is connected to an upper side of the first loading plate (21), the second loading plate (22) is arranged with a second connection portion (221); the second connection portion (221) is fixed, by resistance welding, to the top surface of the protruding tab (112); a bottom surface of the protruding tab (112) defines a second welding hole (1122) that is communicated with the cavity (114) of the protruding tab (112); the second welding hole (1122) leaves a space for the resistance welding needle; the second welding hole (1122) is misaligned with the first welding hole (1121); the sealing adhesive layer (8) is disposed around a welding position between the second connection portion (221) and the protruding tab (112).

4. The battery case according to claim 3, wherein,
the first connection portion (211) is provided defines a first avoidance notch (2111), the first avoidance notch (2111) is spaced apart from the second welding hole (1122); and/or
the second connection portion (221) defines a second avoidance notch (2112) that is spaced apart from the first welding hole (1121).

5. The battery case according to claim 3, wherein, a diameter of the first welding hole (1121) is in a range of 18mm-22mm; and/or
a diameter of the second welding hole (1122) is in a range of 18mm-22mm.

6. The battery case according to claim 3, wherein, the loading assembly (2) further comprises a third loading plate (23), the third loading plate (23) is connected to a side of the second loading plate (22) away from the first loading plate (21), an end of the third loading plate (23) is arranged with a third connection portion (231), and an end of the third connection portion (231) is welded to the body portion (111).

7. The battery case according to claim 6, wherein, the first loading plate (21) further comprises a first substrate (212), the first substrate (212) is arranged with the first connection portion (211); the second loading plate (22) further comprises a second substrate (222), the second substrate (222) is arranged with the second connection portion (221); the second loading plate (22) further comprises a third substrate (232), the third substrate (232) is arranged with the third connection portion (231); the first substrate (212), the second substrate (222), and the third substrate (232) are welded and fixed to each other.

8. The battery case according to claim 7, wherein, the loading assembly (2) is fastened, by a fastener, to a loading member on an outside of the battery case; the loading assembly (2) further comprises a bushing (6); the bushing (6) extends from the first substrate (212), through the second substrate (222), to reach the third substrate (232); the bushing (6) is fixed to the first substrate (212), the second substrate (222), and the third substrate (232); the fastener is threaded, by extending through the bushing (6), to the loading member.

9. The battery case according to claim 8, wherein,
the first substrate (212) is arranged with a plurality of first protrusions (2121) protruding downward; the second substrate (222) is arranged with a plurality of second protrusions (2221) protruding downward; the plurality of second protrusions (2221) and the plurality of first protrusions (2121) are in one-to-one correspondence with each other; each second protrusion (2221) is connected into a corresponding one of the plurality of first protrusions (2121);
the third substrate (232) is arranged with a plurality of third protrusions (2321) protruding upward; the plurality of third protrusions (2321) and the plurality of second protrusions (2221) are in one-to-one correspondence with each other;
the third protrusions (2321) are spaced apart from the second protrusions (2221) are disposed above the second protrusions (2221) respectively; a chamber is formed between each third protrusion (2321) and a corresponding one of the plurality of second protrusions (2221); the bushing (6) extends sequentially from the first protrusions (2121), the second protrusions (2221), the chamber, to reach the third protrusions (2321).

10. The battery case according to claim 7, wherein,
the first substrate (212) is disposed above the first connection portion (211), the first loading plate (21) further comprises a first transition section (213), the first substrate (212) is connected to the first connection portion (211) via the first transition section (213); and/or
the second substrate (222) is disposed above the second connection portion (221), the second loading plate (22) further comprises a second transition section (223), the second substrate (222) is connected to the second connection portion (221) via the second transition section (223); and/or
the third substrate (232) is disposed above the third connection portion (231), the third loading plate (23) further comprises a third transition section (233), the third substrate (232) is connected to the third connection portion (231) via the third transition section (233).

11. The battery case according to claim 6, wherein,
a plurality of protruding portions (1111) are protruding from a side of the body portion (111) facing toward the loading assembly (2); the plurality of protruding portions (1111) are spaced apart from each other and are distributed along a length direction of the frame (11); a connection position is formed between two adjacent protruding portions (1111) of the plurality of protruding portions (1111); the third connection portion (231) is welded to the connection position; a fourth protrusion (2311) is arranged at a position of the third connection portion (231) corresponding to a position between two connection positions; each protruding portion (1111) abuts against an inside of the respective fourth position;
optionally, a reinforcing rib (113) is arranged in the cavity in the frame (11).

12. The battery case according to any one of claims 1 to 11, wherein, the case body (1) further comprises a bottom protective plate (12) disposed at a bottom of the frame (11); the bottom protective plate (12) comprises a steel plate (121) and a fiberglass layer (122) wrapped around a periphery of the steel plate (121).

13. The battery case according to claim 12, wherein, at least two steel plates (121) are arranged, the at least two steel plates (121) are spaced apart from each other and are disposed on a same plane, a glass limiting layer is filled between two adjacent steel plates (121) of the at least two steel plates (121).

14. The battery case according to claim 12, wherein, the battery case further comprises a liquid cooling plate (7); the frame (11), the liquid cooling plate (7), and the bottom protective plate (12) are disposed in sequence in an up-down direction; the liquid cooling plate (7) is connected to a bottom of the frame (11) via a first connection member (3); the bottom protective plate (12) is detachably connected to the liquid cooling plate (7) via a second connection member (5).

15. The battery case according to claim 14, wherein, the liquid cooling plate (7) comprises a channel portion (71) and an abutting portion (72) disposed at an outer periphery of the channel portion (71); the abutting portion (72) is connected to the frame (11) and the bottom protective plate (12); a protruding rib (73) is arranged between the channel portion (71) and the abutting portion (72); the protruding rib (73) protrudes out of the channel portion (71); a fifth protrusion (721) is arranged protruding from the abutting portion (72); the second connection member (5) is screwed, by extending through the bottom protective plate (12), into the fifth protrusion (721); a sealing ring (4) is disposed between the protruding rib (73) and the bottom protective plate (12).

## Patentansprüche

1. Ein Batteriegehäuse, umfassend einen Gehäusekörper (1) und eine an einer Außenseite des Gehäusekörpers (1) angeordnete Tragbaugruppe (2), wobei
der Gehäusekörper (1) einen Rahmen (11) umfasst, die Tragbaugruppe (2) eine erste Tragplatte (21) umfasst, die erste Tragplatte (21) mit einem ersten Verbindungsabschnitt (211) versehen ist, der an einer Unterseite des Rahmens (11) angeordnet ist; der erste Verbindungsabschnitt (211) durch Widerstandsschweißen an einer Bodenfläche des Rahmens (11) befestigt ist; der Rahmen (11) einen Hohlraum (114) im Inneren begrenzt; eine Oberseite des Rahmens (11) eine erste Schweißöffnung (1121) definiert, die mit dem Hohlraum (114) in Verbindung steht; die erste Schweißöffnung (1121) Raum für eine Widerstandsschweißelektrode lässt; und eine Dichtklebstoffschicht (8) um eine Schweißstelle herum angeordnet ist, an der der erste Verbindungsabschnitt (211) mit dem Rahmen (11) verschweißt ist.

2. Das Batteriegehäuse nach Anspruch 1, wobei der Rahmen (11) einen Körperabschnitt (111) und eine mit einer Unterseite des Körperabschnitts (111) verbundene vorstehende Lasche (112) umfasst, wobei zwischen der Unterseite des Körperabschnitts (111) und der vorstehenden Lasche (112) ein Winkel gebildet ist, sowohl der Körperabschnitt (111) als auch die vorstehende Lasche (112) jeweils einen Hohlraum (114) im Inneren begrenzen, der Hohlraum (114) des Körperabschnitts (111) mit dem Hohlraum (114) der vorstehenden Lasche (112) in Verbindung steht, die vorstehende Lasche (112) von einer Seite des Körperabschnitts (111), die von einem Innenraum des Gehäusekörpers (1) abgewandt ist, nach außen vorsteht, die erste Tragplatte (21) fest mit der vorstehenden Lasche (112) verschweißt ist und eine Oberseite der vorstehenden Lasche (112) die erste Schweißöffnung (1121) definiert.

3. Das Batteriegehäuse nach Anspruch 2, wobei die Tragbaugruppe (2) ferner eine zweite Tragplatte (22) umfasst, die zweite Tragplatte (22) mit einer Oberseite der ersten Tragplatte (21) verbunden ist und die zweite Tragplatte (22) mit einem zweiten Verbindungsabschnitt (221) versehen ist; der zweite Verbindungsabschnitt (221) durch Widerstandsschweißen an der Oberseite der vorstehenden Lasche (112) befestigt ist; eine Unterseite der vorstehenden Lasche (112) eine zweite Schweißöffnung (1122) definiert, die mit dem Hohlraum (114) der vorstehenden Lasche (112) in Verbindung steht; die zweite Schweißöffnung (1122) Raum für eine Widerstandsschweißelektrode lässt; die zweite Schweißöffnung (1122) gegenüber der ersten Schweißöffnung (1121) versetzt angeordnet ist; und die Dichtklebstoffschicht (8) um eine Schweißstelle zwischen dem zweiten Verbindungsabschnitt (221) und der vorstehenden Lasche (112) herum angeordnet ist.

4. Das Batteriegehäuse nach Anspruch 3, wobei
der erste Verbindungsabschnitt (211) eine erste Freistellkerbe (2111) definiert, die von der zweiten Schweißöffnung (1122) beabstandet ist; und/oder
der zweite Verbindungsabschnitt (221) eine zweite Freistellkerbe (2112) definiert, die von der ersten Schweißöffnung (1121) beabstandet ist.

5. Das Batteriegehäuse nach Anspruch 3, wobei ein Durchmesser der ersten Schweißöffnung (1121) im Bereich von 18 mm bis 22 mm liegt; und/oder ein Durchmesser der zweiten Schweißöffnung (1122) im Bereich von 18 mm bis 22 mm liegt.

6. Das Batteriegehäuse nach Anspruch 3, wobei die Tragbaugruppe (2) ferner eine dritte Tragplatte (23) umfasst, die mit einer von der ersten Tragplatte (21) abgewandten Seite der zweiten Tragplatte (22) verbunden ist, wobei ein Ende der dritten Tragplatte (23) mit einem dritten Verbindungsabschnitt (231) versehen ist und wobei ein Ende des dritten Verbindungsabschnitts (231) mit dem Körperabschnitt (111) verschweißt ist.

7. Das Batteriegehäuse nach Anspruch 6, wobei die erste Tragplatte (21) ferner ein erstes Substrat (212) umfasst, wobei das erste Substrat (212) mit dem ersten Verbindungsabschnitt (211) versehen ist; die zweite Tragplatte (22) ferner ein zweites Substrat (222) umfasst, wobei das zweite Substrat (222) mit dem zweiten Verbindungsabschnitt (221) versehen ist; die zweite Tragplatte (22) ferner ein drittes Substrat (232) umfasst, wobei das dritte Substrat (232) mit dem dritten Verbindungsabschnitt (231) versehen ist; und wobei das erste Substrat (212), das zweite Substrat (222) und das dritte Substrat (232) miteinander verschweißt und aneinander befestigt sind.

8. Das Batteriegehäuse nach Anspruch 7, wobei die Tragbaugruppe (2) mittels eines Befestigungselements an einem außerhalb des Batteriegehäuses angeordneten Träger befestigt ist; wobei die Tragbaugruppe (2) ferner eine Buchse (6) umfasst; wobei sich die Buchse (6) vom ersten Substrat (212) durch das zweite Substrat (222) hindurch bis zum dritten Substrat (232) erstreckt; wobei die Buchse (6) am ersten Substrat (212), am zweiten Substrat (222) und am dritten Substrat (232) befestigt ist; und wobei das Befestigungselement durch die Buchse (6) hindurchgeführt und mit dem Träger verschraubt ist.

9. Das Batteriegehäuse nach Anspruch 8, wobei das erste Substrat (212) mit einer Mehrzahl von nach unten vorstehenden ersten Vorsprüngen (2121) versehen ist; das zweite Substrat (222) mit einer Mehrzahl von nach unten vorstehenden zweiten Vorsprüngen (2221) versehen ist; die Mehrzahl der zweiten Vorsprünge (2221) und die Mehrzahl der ersten Vorsprünge (2121) einander jeweils eins zu eins zugeordnet sind; jeder zweite Vorsprung (2221) mit einem entsprechenden ersten Vorsprung aus der Mehrzahl der ersten Vorsprünge (2121) verbunden ist;
wobei das dritte Substrat (232) mit einer Mehrzahl von nach oben vorstehenden dritten Vorsprüngen (2321) versehen ist; die Mehrzahl der dritten Vorsprünge (2321) und die Mehrzahl der zweiten Vorsprünge (2221) einander jeweils eins zu eins zugeordnet sind;
wobei die dritten Vorsprünge (2321) jeweils mit Abstand oberhalb der zweiten Vorsprünge (2221) angeordnet sind; wobei zwischen jedem dritten Vorsprung (2321) und einem entsprechenden zweiten Vorsprung aus der Mehrzahl der zweiten Vorsprünge (2221) eine Kammer gebildet ist; und wobei sich die Buchse (6) nacheinander von den ersten Vorsprüngen (2121) über die zweiten Vorsprünge (2221) und die Kammer bis zu den dritten Vorsprüngen (2321) erstreckt.

10. Das Batteriegehäuse nach Anspruch 7, wobei das erste Substrat (212) oberhalb des ersten Verbindungsabschnitts (211) angeordnet ist, die erste Tragplatte (21) ferner einen ersten Übergangsabschnitt (213) umfasst und das erste Substrat (212) über den ersten Übergangsabschnitt (213) mit dem ersten Verbindungsabschnitt (211) verbunden ist; und/oder
wobei das zweite Substrat (222) oberhalb des zweiten Verbindungsabschnitts (221) angeordnet ist, die zweite Tragplatte (22) ferner einen zweiten Übergangsabschnitt (223) umfasst und das zweite Substrat (222) über den zweiten Übergangsabschnitt (223) mit dem zweiten Verbindungsabschnitt (221) verbunden ist; und/oder
wobei das dritte Substrat (232) oberhalb des dritten Verbindungsabschnitts (231) angeordnet ist, die dritte Tragplatte (23) ferner einen dritten Übergangsabschnitt (233) umfasst und das dritte Substrat (232) über den dritten Übergangsabschnitt (233) mit dem dritten Verbindungsabschnitt (231) verbunden ist.

11. Das Batteriegehäuse nach Anspruch 6, wobei eine Mehrzahl von vorstehenden Abschnitten (1111) von einer der Tragbaugruppe (2) zugewandten Seite des Körperabschnitts (111) vorstehen; wobei die Mehrzahl der vorstehenden Abschnitte (1111) voneinander beabstandet und entlang einer Längsrichtung des Rahmens (11) verteilt angeordnet ist; wobei zwischen zwei benachbarten vorstehenden Abschnitten (1111) der Mehrzahl der vorstehenden Abschnitte (1111) eine Verbindungsstelle gebildet ist; wobei der dritte Verbindungsabschnitt (231) mit der Verbindungsstelle verschweißt ist; wobei an einer Stelle des dritten Verbindungsabschnitts (231), die einer Position zwischen zwei Verbindungsstellen entspricht, ein vierter Vorsprung (2311) angeordnet ist; wobei jeder vorstehende Abschnitt (1111) an einer Innenseite des jeweiligen vierten Vorsprungs anliegt;
wobei optional eine Verstärkungsrippe (113) in dem Hohlraum des Rahmens (11) angeordnet ist.

12. Das Batteriegehäuse nach einem der Ansprüche 1 bis 11, wobei der Gehäusekörper (1) ferner eine am Boden des Rahmens (11) angeordnete Bodenschutzplatte (12) umfasst; wobei die Bodenschutzplatte (12) eine Stahlplatte (121) und eine Glasfaserschicht (122) umfasst, die um den Umfang der Stahlplatte (121) herum angeordnet ist.

13. Das Batteriegehäuse nach Anspruch 12, wobei mindestens zwei Stahlplatten (121) vorgesehen sind, wobei die mindestens zwei Stahlplatten (121) voneinander beabstandet und in derselben Ebene angeordnet sind, wobei zwischen zwei benachbarten Stahlplatten (121) der mindestens zwei Stahlplatten (121) eine Glasbegrenzungsschicht eingefüllt ist.

14. Das Batteriegehäuse nach Anspruch 12, wobei das Batteriegehäuse ferner eine Flüssigkeitskühlplatte (7) umfasst; wobei der Rahmen (11), die Flüssigkeitskühlplatte (7) und die Bodenschutzplatte (12) in einer Richtung von oben nach unten in dieser Reihenfolge angeordnet sind; wobei die Flüssigkeitskühlplatte (7) über ein erstes Verbindungselement (3) mit einer Unterseite des Rahmens (11) verbunden ist; und wobei die Bodenschutzplatte (12) über ein zweites Verbindungselement (5) lösbar mit der Flüssigkeitskühlplatte (7) verbunden ist.

15. Das Batteriegehäuse nach Anspruch 14, wobei die Flüssigkeitskühlplatte (7) einen Kanalabschnitt (71) und einen an einem Außenumfang des Kanalabschnitts (71) angeordneten Anlageabschnitt (72) umfasst; wobei der Anlageabschnitt (72) mit dem Rahmen (11) und der Bodenschutzplatte (12) verbunden ist; wobei zwischen dem Kanalabschnitt (71) und dem Anlageabschnitt (72) eine vorstehende Rippe (73) angeordnet ist; wobei die vorstehende Rippe (73) aus dem Kanalabschnitt (71) herausragt; wobei ein fünfter Vorsprung (721) derart angeordnet ist, dass er aus dem Anlageabschnitt (72) hervorsteht; wobei das zweite Verbindungselement (5) durch die Bodenschutzplatte (12) hindurchgeführt und in den fünften Vorsprung (721) eingeschraubt ist; und wobei ein Dichtring (4) zwischen der vorstehenden Rippe (73) und der Bodenschutzplatte (12) angeordnet ist.

## Revendications

1. Un boîtier de batterie comprenant un corps de boîtier (1) et un ensemble porteur (2) disposé à l'extérieur du corps de boîtier (1), dans lequel le corps de boîtier (1) comprend un cadre (11), l'ensemble porteur (2) comprend une première plaque porteuse (21), la première plaque porteuse (21) comporte une première partie de raccordement (211), la première partie de raccordement (211) étant disposée sur une face inférieure du cadre (11) ; la première partie de raccordement (211) est fixée, par soudage par résistance, à une surface inférieure du cadre (11) ; le cadre (11) délimite une cavité (114) en son sein ; une surface supérieure du cadre (11) définit un premier orifice de soudage (1121) communiquant avec la cavité (114) ; le premier orifice de soudage (1121) ménage un espace permettant le passage d'une électrode de soudage par résistance ; une couche d'adhésif d'étanchéité (8) est disposée autour d'un emplacement de soudage où la première partie de raccordement (211) est soudée au cadre (11).

2. Le boîtier de batterie selon la revendication 1, dans lequel le cadre (11) comprend une partie de corps (111) et une languette en saillie (112) reliée à une partie inférieure de la partie de corps (111), un angle étant formé entre la partie inférieure de la partie de corps (111) et la languette en saillie (112), la partie de corps (111) et la languette en saillie (112) délimitant chacune la cavité (114) en leur sein, la cavité (114) de la partie de corps (111) communiquant avec la cavité (114) de la languette en saillie (112), la languette en saillie (112) faisant saillie vers l'extérieur à partir d'un côté de la partie de corps (111) opposé à l'intérieur du corps de boîtier (1), la première plaque porteuse (21) étant fixée par soudage à la languette en saillie (112), et une surface supérieure de la languette en saillie (112) définissant le premier orifice de soudage (1121).

3. Le boîtier de batterie selon la revendication 2, dans lequel l'ensemble porteur (2) comprend en outre une deuxième plaque porteuse (22), la deuxième plaque porteuse (22) étant reliée à une face supérieure de la première plaque porteuse (21), la deuxième plaque porteuse (22) comportant une deuxième partie de raccordement (221) ; la deuxième partie de raccordement (221) est fixée, par soudage par résistance, à la surface supérieure de la languette en saillie (112) ; une surface inférieure de la languette en saillie (112) définit un deuxième orifice de soudage (1122) communiquant avec la cavité (114) de la languette en saillie (112) ; le deuxième orifice de soudage (1122) ménage un espace permettant le passage de l'électrode de soudage par résistance ; le deuxième orifice de soudage (1122) est décalé par rapport au premier orifice de soudage (1121) ; la couche d'adhésif d'étanchéité (8) est disposée autour d'un emplacement de soudage situé entre la deuxième partie de raccordement (221) et la languette en saillie (112).

4. Le boîtier de batterie selon la revendication 3, dans lequel la première partie de raccordement (211) définit une première encoche de dégagement (2111), la première encoche de dégagement (2111) étant espacée du deuxième orifice de soudage (1122) ; et/ou
la deuxième partie de raccordement (221) définit une deuxième encoche de dégagement (2112), la deuxième encoche de dégagement (2112) étant espacée du premier orifice de soudage (1121).

5. Le boîtier de batterie selon la revendication 3, dans lequel le diamètre du premier orifice de soudage (1121) est compris entre 18 mm et 22 mm ; et/ou le diamètre du deuxième orifice de soudage (1122) est compris entre 18 mm et 22 mm.

6. Le boîtier de batterie selon la revendication 3, dans lequel l'ensemble porteur (2) comprend en outre une troisième plaque porteuse (23), la troisième plaque porteuse (23) étant reliée à un côté de la deuxième plaque porteuse (22) opposé à la première plaque porteuse (21), une extrémité de la troisième plaque porteuse (23) comportant une troisième partie de raccordement (231), et une extrémité de la troisième partie de raccordement (231) étant soudée à la partie de corps (111).

7. Le boîtier de batterie selon la revendication 6, dans lequel la première plaque porteuse (21) comprend en outre un premier substrat (212), le premier substrat (212) comportant la première partie de raccordement (211) ; la deuxième plaque porteuse (22) comprend en outre un deuxième substrat (222), le deuxième substrat (222) comportant la deuxième partie de raccordement (221) ; la deuxième plaque porteuse (22) comprend en outre un troisième substrat (232), le troisième substrat (232) comportant la troisième partie de raccordement (231) ; le premier substrat (212), le deuxième substrat (222) et le troisième substrat (232) étant soudés et fixés les uns aux autres.

8. Le boîtier de batterie selon la revendication 7, dans lequel l'ensemble porteur (2) est fixé, au moyen d'un élément de fixation, à un élément porteur situé à l'extérieur du boîtier de batterie ; l'ensemble porteur (2) comprend en outre une douille (6) ; la douille (6) s'étend depuis le premier substrat (212), en traversant le deuxième substrat (222), jusqu'au troisième substrat (232) ; la douille (6) est fixée au premier substrat (212), au deuxième substrat (222) et au troisième substrat (232) ; l'élément de fixation traverse la douille (6) et est vissé dans l'élément porteur.

9. Le boîtier de batterie selon la revendication 8, dans lequel le premier substrat (212) comporte une pluralité de premières saillies (2121) faisant saillie vers le bas ; le deuxième substrat (222) comporte une pluralité de deuxièmes saillies (2221) faisant saillie vers le bas ; la pluralité de deuxièmes saillies (2221) et la pluralité de premières saillies (2121) sont en correspondance biunivoque ; chaque deuxième saillie (2221) est reliée à une première saillie correspondante parmi la pluralité de premières saillies (2121) ;
le troisième substrat (232) comporte une pluralité de troisièmes saillies (2321) faisant saillie vers le haut ; la pluralité de troisièmes saillies (2321) et la pluralité de deuxièmes saillies (2221) sont en correspondance biunivoque ;
les troisièmes saillies (2321) sont espacées des deuxièmes saillies (2221) et sont disposées respectivement au-dessus de celles-ci ; une chambre est formée entre chaque troisième saillie (2321) et une deuxième saillie correspondante parmi la pluralité de deuxièmes saillies (2221) ; la douille (6) s'étend successivement depuis les premières saillies (2121), en passant par les deuxièmes saillies (2221) et la chambre, jusqu'aux troisièmes saillies (2321).

10. Le boîtier de batterie selon la revendication 7, dans lequel
le premier substrat (212) est disposé au-dessus de la première partie de raccordement (211), la première plaque porteuse (21) comprenant en outre une première section de transition (213), le premier substrat (212) étant relié à la première partie de raccordement (211) par l'intermédiaire de la première section de transition (213) ; et/ou
le deuxième substrat (222) est disposé au-dessus de la deuxième partie de raccordement (221), la deuxième plaque porteuse (22) comprenant en outre une deuxième section de transition (223), le deuxième substrat (222) étant relié à la deuxième partie de raccordement (221) par l'intermédiaire de la deuxième section de transition (223) ; et/ou
le troisième substrat (232) est disposé au-dessus de la troisième partie de raccordement (231), la troisième plaque porteuse (23) comprenant en outre une troisième section de transition (233), le troisième substrat (232) étant relié à la troisième partie de raccordement (231) par l'intermédiaire de la troisième section de transition (233).

11. Le boîtier de batterie selon la revendication 6, dans lequel une pluralité de parties en saillie (1111) font saillie à partir d'un côté de la partie de corps (111) tourné vers l'ensemble porteur (2) ; les parties en saillie (1111) sont espacées les unes des autres et réparties le long d'une direction longitudinale du cadre (11) ; une position de raccordement est formée entre deux parties en saillie (1111) adjacentes parmi la pluralité de parties en saillie (1111) ; la troisième partie de raccordement (231) est soudée à la position de raccordement ; une quatrième saillie (2311) est disposée à un emplacement de la troisième partie de raccordement (231) correspondant à une position située entre deux positions de raccordement ; chaque partie en saillie (1111) est en appui contre une face intérieure de la quatrième position correspondante ;
éventuellement, une nervure de renfort (113) est disposée dans la cavité du cadre (11).

12. Le boîtier de batterie selon l'une quelconque des revendications 1 à 11, dans lequel le corps de boîtier (1) comprend en outre une plaque de protection inférieure (12) disposée au fond du cadre (11) ; la plaque de protection inférieure (12) comprend une plaque d'acier (121) et une couche de fibres de verre (122) enveloppant la périphérie de la plaque d'acier (121).

13. Le boîtier de batterie selon la revendication 12, dans lequel au moins deux plaques d'acier (121) sont prévues, lesdites plaques d'acier (121) étant espacées les unes des autres et disposées dans un même plan, une couche de limitation en verre étant insérée entre deux plaques d'acier (121) adjacentes parmi lesdites plaques d'acier (121).

14. Le boîtier de batterie selon la revendication 12, dans lequel le boîtier de batterie comprend en outre une plaque de refroidissement par liquide (7) ; le cadre (11), la plaque de refroidissement par liquide (7) et la plaque de protection inférieure (12) sont disposés successivement dans cet ordre suivant une direction verticale, du haut vers le bas ; la plaque de refroidissement par liquide (7) est reliée à la partie inférieure du cadre (11) par l'intermédiaire d'un premier élément de liaison (3) ; la plaque de protection inférieure (12) est reliée de manière amovible à la plaque de refroidissement par liquide (7) par l'intermédiaire d'un deuxième élément de liaison (5).

15. Le boîtier de batterie selon la revendication 14, dans lequel la plaque de refroidissement par liquide (7) comprend une partie de canal (71) et une partie d'appui (72) disposée à la périphérie extérieure de la partie de canal (71); la partie d'appui (72) est reliée au cadre (11) et à la plaque de protection inférieure (12) ; une nervure en saillie (73) est disposée entre la partie formant canal (71) et la partie d'appui (72) ; la nervure en saillie (73) fait saillie hors de la partie formant canal (71) ; une cinquième saillie (721) fait saillie à partir de la partie d'appui (72) ; le deuxième élément de liaison (5) traverse la plaque de protection inférieure (12) et est vissé dans la cinquième saillie (721) ; une bague d'étanchéité (4) est disposée entre la nervure en saillie (73) et la plaque de protection inférieure (12).
